Europäisches Patentamt

European Patent Office

Office européen des brevets

(19)

(11) Numéro de publication : **0 081 886**
**B1**

(12) **FASCICULE DE BREVET EUROPÉEN**

(45) Date de publication du fascicule du brevet :
10.09.86

(21) Numéro de dépôt : 82201583.0

(22) Date de dépôt : 13.12.82

(51) Int. Cl.⁴ : **D 01 G 23/00, B 65 G 25/08,**
**B 65 G 65/44, B 65 G 47/18,**
**B 65 G 49/00**

(54) **Procédé de chargement automatique de machines traitant des matières en vrac et dispositif pour la mise en oeuvre de ce procédé.**

(30) Priorité : 16.12.81 BE 206850

(43) Date de publication de la demande :
22.06.83 Bulletin 83/25

(45) Mention de la délivrance du brevet :
10.09.86 Bulletin 86/37

(84) Etats contractants désignés :
AT CH DE FR GB IT LI LU NL SE

(56) Documents cités :
CH-A- 444 751
DE-A- 1 456 871
DE-C- 158 377
DE-U- 1 845 781
DE-U- 1 888 588
FR-A- 1 066 542
FR-A- 2 295 142
US-A- 3 923 149
"Soviet Inventions Illustrated" Week D27, 12 August
1981 Section Q 35

(73) Titulaire : Pierret, Hubert
rue du Tambour 29
B-6838 Corbion (Bouillon) (BE)

Pierret, Gabriel Léon
rue du Tambour 33
B-6838 Corbion (Bouillon) (BE)

Pierret, Maurice Jean
rue de l'Eglise 15
B-6838 Corbion (Bouillon) (BE)

Pierret, Jean-Marie Michel
rue du Sommet 14
B-6838 Corbion (Bouillon) (BE)

(72) Inventeur : Pierret, Hubert
rue du Tambour 29
B-6838 Corbion (Bouillon) (BE)
Inventeur : Pierret, Gabriel Léon
rue du Tambour 33
B-6838 Corbion (Bouillon) (BE)
Inventeur : Pierret, Maurice Jean
rue de l'Eglise 15
B-6838 Corbion (Bouillon) (BE)
Inventeur : Pierret, Jean-Marie Michel
rue du Sommet 14
B-6838 Corbion (Bouillon) (BE)

(74) Mandataire : Thirion, Robert et al
Bureau GEVERS S.A. 7, rue de Livourne Bte 1
B-1050 Bruxelles (BE)

## Description

La présente invention a pour objet un procédé de chargement automatique de machines traitant des matières en vrac présentant une certaine longueur et généralement comprimées en balles, en particulier des matières telles que fibres, fils, débris de produits textiles tissés ou non tissés, matières plastiques, suivant lequel on extrait à la base d'une masse de matière, à l'aide d'éléments saillants pénétrant dans la masse, une quantité de matière pour en former un ruban qui est dirigé vers les machines précitées.

Les machines traitant les matières précitées sont, encore actuellement, généralement alimentées manuellement, ce qui présente divers inconvénients, à savoir : présence constante de personnel auprès des machines, travail pénible, alimentation irrégulière desdites machines due à la manipulation difficile des matières traitées, accumulation de fibres s'échappant de la masse de matière autour desdites machines et constituant un danger lorsque des amas de fibres incontrôlés sont happés par des organes mobiles des machines.

On a aussi tenté d'automatiser le chargement desdites machines soit à l'aide de bandes transporteuses sans fin munies d'éléments saillants mobiles qui se rétractent en dessous du niveau de la bande lorsqu'ils arrivent à l'extrémité de cette dernière, soit, comme prévu dans le brevet suisse n° 444 751, en transportant, grâce à un courant d'air, la matière extraite d'une masse de matière en vrac par des éléments saillants mobiles agencés sur des tringles animées d'un mouvement alternatif. La première façon de procéder, si elle permet d'assurer un chargement régulier des machines, présente toutefois des inconvénients sérieux ; à savoir blocage des éléments dans leurs cavités par introduction de matière dans ces dernières, mécanisme complexe et fragile pour rétracter les éléments saillants, tandis que la seconde façon de procéder ne permet pas d'assurer, vu le mode de transport par courant d'air, un chargement continu et régulier des machines.

L'invention a pour but de remédier à ces inconvénients et de procurer un procédé de chargement automatique de machines permettant, d'une part, de réduire de manière très sensible la main-d'œuvre préposée au chargement et d'assurer une alimentation continue et régulière desdites machines sans que des matières puissent s'échapper de la masse de matière traitée et, d'autre part, d'être mis en œuvre à l'aide d'un matériel robuste exempt de pannes.

A cet effet, suivant l'invention, ce procédé consiste à disposer les éléments saillants en au moins deux rangées s'étendant suivant la direction de déplacement du ruban, à animer au moins une de ces deux rangées d'éléments d'un mouvement alternatif suivant la direction de déplacement du ruban afin que cette rangée mobile d'éléments entraîne de la matière dans le sens de déplacement du ruban quand elle se déplace dans ce sens et que l'autre rangée d'éléments retienne la matière pour que celle-ci n'accompagne pas les éléments de la rangée mobile lorsque cette dernière se déplace en sens contraire de celui du ruban et à régler l'amplitude du mouvement susdit pour que la matière, extraite de la masse de matière par les éléments saillants, se déplace vers et au-delà d'une ouverture dont la section correspond sensiblement à la section du ruban à former, le mouvement des éléments saillants s'étendant, lorsque ceux-ci se déplacent dans le sens de déplacement du ruban, jusqu'au-delà de cette ouverture.

Suivant l'invention, on anime avantageusement les deux rangées d'éléments susdites d'un mouvement alternatif suivant la direction de déplacement du ruban et on commande ces rangées de telle sorte qu'au moins une de ces rangées soit se déplace dans le sens du ruban, soit est à l'arrêt, pendant tout le temps du mouvement de l'autre rangée en sens contraire de celui du ruban.

L'invention a également pour objet un dispositif pour la mise en œuvre du procédé précité.

Suivant l'invention, ce dispositif comprend une trémie, montée sur un bâti fixe, dont le sommet est ouvert et qui présente, le long de son bord le plus proche de la machine à charger, une ouverture quadrangulaire s'étendant à partir de la base de la trémie et dont la section correspond sensiblement à la section du ruban de matière à former, au moins deux rangées d'éléments saillants agencées dans le fond de la trémie, sensiblement perpendiculairement au bord de la trémie le long duquel est ménagée l'ouverture susdite et à un niveau inférieur à celui du bord de l'ouverture opposé à la base de la trémie, au moins une de ces rangées d'éléments saillants étant mobile, une commande pour entraîner la rangée d'éléments mobile en un mouvement alternatif suivant l'axe longitudinal du ruban à former, l'amplitude de ce mouvement étant telle que les éléments saillants de la rangée se déplacent de la paroi de la trémie opposée à l'ouverture précitée jusqu'au-delà de cette ouverture, et des moyens pour approvisionner la trémie en matière.

Suivant un mode de réalisation de l'invention, ledit dispositif comprend un couteau disposé à l'intérieur de la trémie et monté sur cette dernière, à proximité de l'ouverture précitée, sensiblement parallèlement à la base de la trémie et à une distance de cette base qui est légèrement inférieure à la distance séparant ladite base du bord de l'ouverture opposé à cette base et à niveau supérieur à celui des éléments saillants afin que les éléments mobiles puissent passer sous le couteau lorsqu'ils entraînent la matière au-delà de l'ouverture.

Suivant une forme de réalisation avantageuse de l'invention, la base de la trémie est ouverte et est en forme de quadrilatère à quatre angles droits, l'ouverture précitée étant ménagée le long d'un des côtés de ce quadrilatère et les rangées d'éléments saillants étant portées par au moins deux séries de barreaux mobiles obturant la base de la trémie et s'étendant perpendiculairement à l'ouverture précitée, des guides étant prévus pour que les barreaux se déplacent suivant leur axe longitudinal, la dimension desdits barreaux, prise parallèlement à leur axe longitudinal, étant supérieure à la dimension correspondante de la base de la trémie de manière à ce que ces barreaux obturent toujours la base de la trémie quelle que soit leur position, les barreaux de chacune de ces deux séries étant assemblés entre eux et la commande prévue pour entraîner chacune de ces séries de·barreaux en un mouvement de va-et-vient étant agencée pour qu'une série de barreaux se déplace dans un sens lorsque l'autre série de barreaux se déplace en sens opposé, cette commande étant en outre agencée pour que, pendant tout le temps du mouvement d'une des séries de barreaux en sens contraire de celui du ruban de matière, l'autre série soit se déplace dans le même sens que celui du ruban de matière soit est à l'arrêt.

Suivant un mode de réalisation particulièrement avantageux de l'invention, les parois latérales de la trémie, s'étendant le long des côtés du quadrilatère adjacents au côté où est ménagée l'ouverture, ont chacune une zone verticale s'étendant depuis la base de la trémie jusqu'à une hauteur au moins égale à la hauteur de l'ouverture, cette zone verticale étant prolongée par une zone oblique pour former l'évasement de la trémie, la dimension de l'ouverture prise perpendiculairement à la direction de déplacement des barreaux précités étant sensiblement égale à la distance séparant les zones verticales susdites.

D'autres détails et particularités de l'invention ressortiront de la description des dessins annexés au présent mémoire qui illustrent le procédé susdit et qui représentent, à titre d'exemples non limitatifs, des formes de réalisation particulières du dispositif suivant l'invention.

La figure 1 est une vue en élévation et en coupe, avec brisures partielles, du dispositif suivant l'invention associé à une machine à alimenter.

La figure 2 est une vue en coupe suivant la ligne II-II de la figure 1 et à plus grande échelle que celle de la figure 1.

La figure 3 est une vue partielle en coupe suivant la ligne III-III de la figure 1 et montrant le mécanisme d'entraînement du couteau.

Les figures 4 et 5 sont des vues de détail, en coupe suivant les lignes IV-IV et V-V de la figure 1.

La figure 6 est une vue analogue à la figure 1 et montre une variante du dispositif illustré aux figures 1 à 5.

Les figures 7 et 8 sont des vues schématiques en coupe, analogues à la figure 2, montrant des variantes de trémie et d'éléments saillants.

La figure 9 est une vue montrant en élévation et à grande échelle une variante d'un détail de la figure 1.

La figure 10 est une vue analogue à la figure 9 montrant une variante du détail représenté à ladite figure 9.

La figure 11 est une vue partielle, analogue aux figures 1 et 6, montrant une forme de réalisation du couteau différente de celle illustrée aux figures 1 à 3.

La figure 12 est une vue partielle, analogue aux figures 1 et 6 et à plus grande échelle que celle de ces dernières, montrant une variante des éléments saillants illustrés auxdites figures 1 et 6.

Dans les différentes figures, les mêmes notations de référence désignent des éléments identiques ou analogues.

Le procédé suivant l'invention et illustré aux dessins est destiné à l'alimentation ou chargement automatique en fibres d'une machine 1, telle que coupeuse de fibres, ce procédé consistant à extraire en continu des fibres d'une masse de matière 2 pour former un ruban 3 de section déterminée correspondant à la section de matière pouvant être absorbée par la coupeuse et à faire progresser régulièrement ce ruban 3 vers la coupeuse jusqu'au moment où il est repris par la bande transporteuse 4 de cette dernière. Cette extraction de matière s'effectue grâce à des éléments saillants 29 pénétrant dans la masse dont au moins une partie sont mobiles et qui par leur mouvemnt organisent les fibres pour former le ruban et pour faire progresser celui-ci dans le sens indiqué ci-dessus. Le procédé suivant l'invention consiste à disposer ces éléments saillants 29 en au moins deux rangées s'étendant suivant la direction de déplacement du ruban 3 et à animer au moins une de ces deux rangées d'éléments d'un mouvement alternatif suivant la direction de déplacement du ruban afin que cette rangée mobile d'éléments entraîne de la matière dans le sens de déplacement du ruban quand elle se déplace dans ce sens et que l'autre rangée d'éléments retienne la matière pour que celle-ci n'accompagne pas les éléments de la rangée mobile lorsque cette dernière se déplace en sens contraire de celui du ruban. On règle l'amplitude du mouvement susdit pour que la matière, qui est extraite de la masse de matière par les éléments saillants 29, se déplace vers et au-delà d'une ouverture 9 dont la section correspond sensiblement à la section du ruban 3 à former, le mouvement des éléments saillants 29 s'étendant, lorsque ceux-ci se déplacent dans le sens de déplacement du ruban 3, jusqu'au-delà de cette ouverture 9.

Suivant l'invention, on peut avantageusement animer les deux rangées d'éléments susdites d'un mouvement alternatif suivant la direction de déplacement du ruban 3 et commander ces rangées de telle sorte qu'au moins une des rangées soit se déplace dans le sens du ruban, soit est à l'arrêt, pendant tout le temps du mouvement de l'autre rangée en sens contraire de celui du ruban.

Suivant l'invention, on guide la matière extraite, grâce aux zones 18 des parois latérales d'une trémie 5 contenant la masse de matière et grâce aux guides 20' de la machine, de part et d'autre des rangées d'éléments susdites et sur une distance au moins égale à l'amplitude du mouvement desdites rangées, pour former les bords latéraux du ruban et on coupe, grâce à un couteau 12, la matière extraite, au-dessus des éléments 29 et en un endroit situé en amont de la fin de course des rangées d'éléments lorsqu'elles se déplacent dans le sens du ruban 3, pour délimiter la face supérieure 14 du ruban et en régler l'épaisseur, la matière excédentaire qui est coupée étant dirigée dans la masse de matière.

Pour améliorer l'étirage des fibres et l'orientation de ces dernières ainsi que pour couper les fibres trop longues, on coupe, à l'aide d'un élément coupant 66, le ruban de matière entre l'endroit de coupe (couteau 12) et la fin de course des rangées d'éléments lorsqu'elles se déplacent dans le sens de déplacement du ruban, cette coupe, par l'élément 66, s'effectuant, dans un plan sensiblement vertical et parallèle à l'axe longitudinal du ruban, entre les rangées d'éléments susdites.

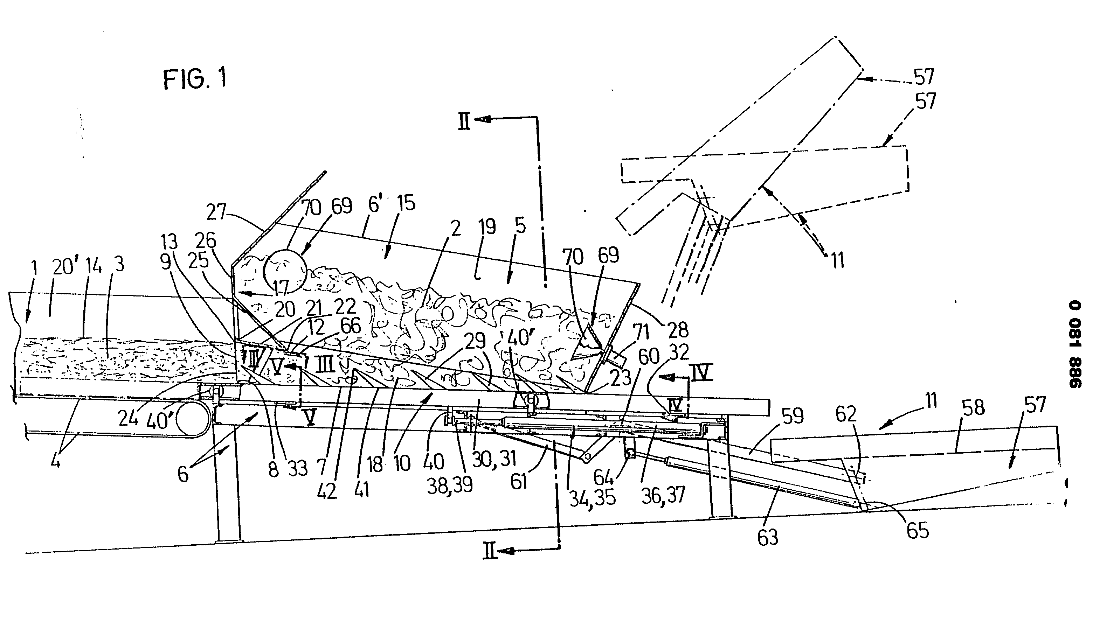

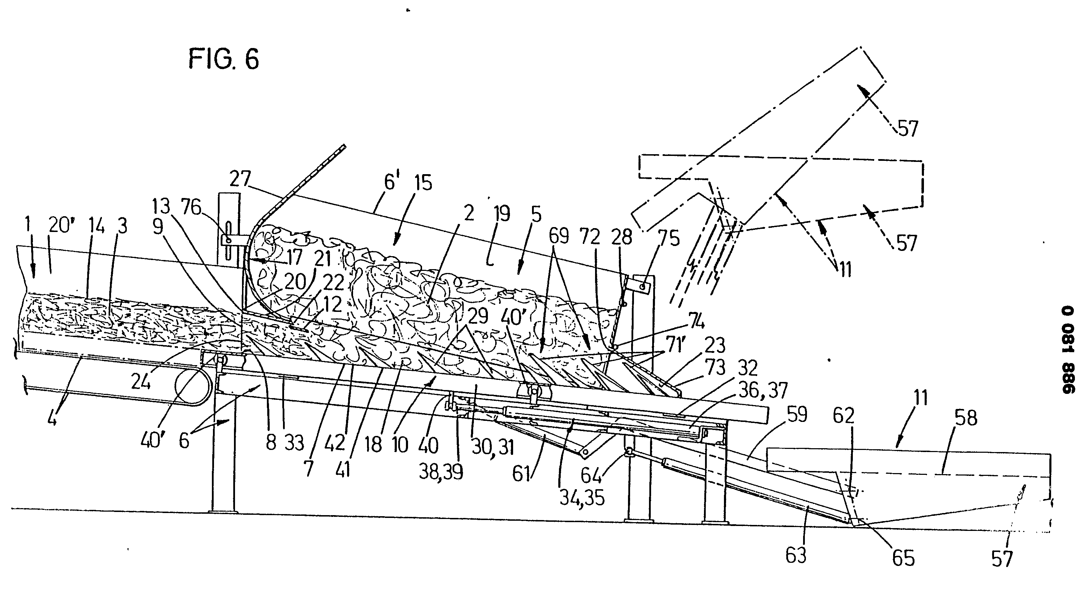

Le dispositif suivant l'invention pour la mise en œuvre de ce procédé, comprend, comme montré notamment aux figures 1 et 6, une trémie 5, montée sur un bâti fixe 6, dont le sommet 6' et la base 7 sont ouverts et qui présente le long de son bord 8 le plus proche de la machine 1 une ouverture quadrangulaire 9 s'étendant à partir de la base 7 de la trémie et dont la section correspond sensiblement à la section du ruban de fibres 3 à former, des moyens mobiles 10 supportant les éléments saillants 29 et disposés à la base de la trémie pour obturer cette base et sur lesquels repose la masse 2 de matière contenue dans la trémie, ces moyens 10, dont les éléments 29 sont agencés pour séparer des fibres de la masse, étant commandés pour que leur mouvement alternatif, suivant l'axe longitudinal du ruban 3, soit tel que les fibres séparées de la masse 2 se déplacent dans la trémie 5 vers l'ouverture 9 présentée par cette dernière et au-delà de cette ouverture vers la bande transporteuse 4 de la machine à charger et des moyens 11 pour approvisionner la trémie 5 en matière, ces moyens 11 étant représentés aux figures 1 et 6, en traits pleins, mixtes et interrompus, dans les différentes positions qu'ils peuvent occuper.

Le dispositif comprend avantageusement un couteau 12 disposé à l'intérieur de la trémie, à proximité de l'ouverture 9, parallèlement aux moyens mobiles 10 et à une distance de la base 7 de la trémie légèrement inférieure à la distance séparant cette base 7 du bord 13 de l'ouverture 9 opposé à ladite base, ledit couteau étant agencé pour couper les fibres entraînées par les moyens mobiles 10 dans la trémie afin de délimiter la face supérieure 14 du ruban 3 susdit.

La base 7 de la trémie 5 est un quadrilatère à quatre angles droits et l'ouverture 9 est ménagée le long d'un des côtés de ce quadrilatère. Les parois latérales 15 et 16 de la trémie 5 adjacentes à la paroi latérale 17 dans laquelle est pratiquée l'ouverture 9 présentent chacune une zone verticale 18 s'étendant depuis la base 7 de la trémie jusqu'à une hauteur au moins égale à la hauteur de l'ouverture 9, cette zone verticale 18 étant prolongée par la zone oblique 19 pour former l'évasement de la trémie, les moyens mobiles étant commandés pour se déplacer suivant une direction parallèle aux zones verticales 18 des parois latérales, la dimension de l'ouverture 9 prise perpendiculairement à cette direction étant égale à la distance séparant les zones verticales 18 des parois latérales et légèrement inférieure à la distance séparant les guides latéraux 20' de la machine bordant la bande transporteuse 4.

Pour permettre une bonne sortie du ruban 3 de la trémie, il est prévu, le long du bord 20 de l'ouverture 9, une tôle de guidage 21 qui s'étend à l'intérieur de la trémie et qui réunit les zones verticales 18 des parois latérales 15 et 16 de la trémie, le couteau 12 étant disposé à proximité du bord 22 de cette tôle 21 et la distance qui sépare ce bord de la base 7 de la trémie étant légèrement inférieure à la distance séparant le bord de la tôle 21, raccordé au bord 20 de l'ouverture 9, de ladite base 7.

Le bâti 6 est incliné de manière à ce que les moyens 10 soient situés dans le prolongement du brin supérieur de la bande transporteuse 4 de la machine. Pour assurer une bonne extraction des fibres de la masse sans occasionner de pont de matière ou de bourrage de matière dans la trémie, les zones verticales 18 des parois latérales 15 et 16 présentent la forme d'un triangle rectangle dont le sommet est situé sur le côté 23 de la base de la trémie et dont la base 24 est confondue avec un bord de l'ouverture 9, la paroi latérale 17 de la trémie (fig. 1) étant constituée par une tôle pliée en trois sections 25, 26, et 27 faisant entre elles deux angles de l'ordre de 135°, cette tôle pliée, qui a pour but de ramener au-dessus des moyens 10 les fibres se mouvant sur le couteau 12, étant raccordée, d'une part, au bord 22 de la tôle 21 pour faire avec cette dernière un angle de l'ordre de 35° et, d'autre part, aux parois latérales 15 et 16, ces dernières ayant leurs zones obliques 19 formant l'évasement de la trémie qui font avec les zones verticales 18 un angle de l'ordre de 45°, la paroi latérale 28 de la trémie étant plane et formant un angle compris entre 90° et 150° par rapport à un plan horizontal.

Comme montré notamment aux figures 1 et 6, les moyens mobiles 10 dont les éléments 29 font saillie à l'intérieur de la trémie sont commandés pour que ces éléments se déplacent depuis la paroi latérale 28 de la trémie vers l'ouverture 9 et jusqu'au-delà de celle-ci, la hauteur de ces éléments 29 étant inférieure à la distance séparant l'arête du couteau 12 de la base 7 de la trémie.

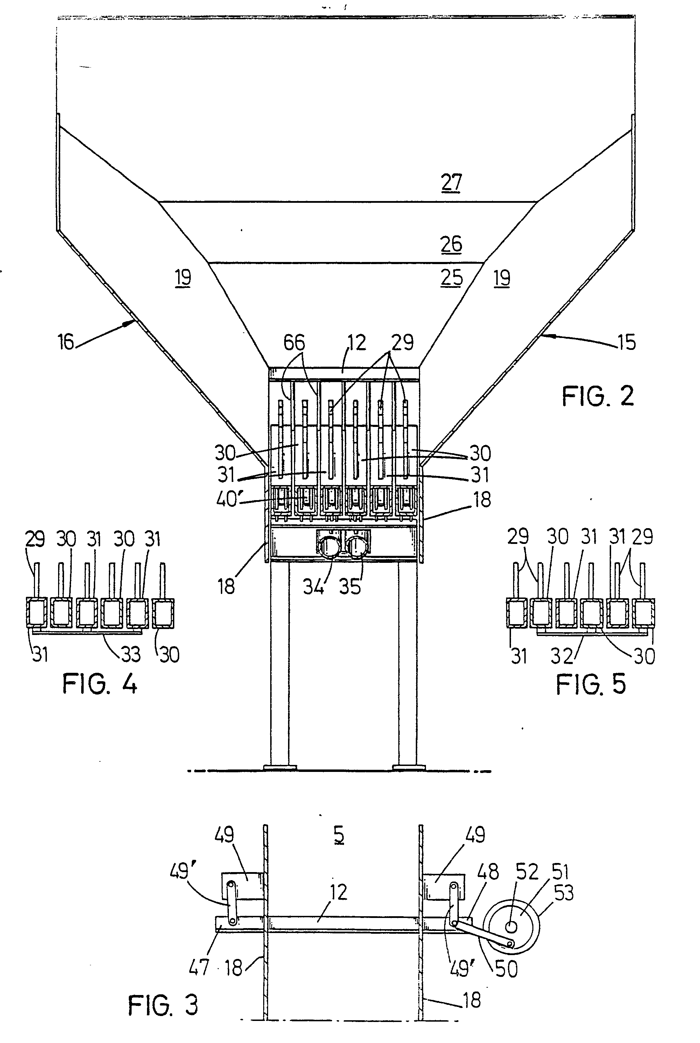

Dans les formes de réalisation montrées aux figures 1 à 6, ces éléments 29 sont portés par deux séries de barreaux mobiles 30 et 31 obturant la base 7 de la trémie et disposés parallèlement aux zones verticales 18 des parois latérales 15 et 16, la dimension de ces barreaux, prise parallèlement à la direction de déplacement des organes 29, étant supérieure à la dimension correspondante de la base 7 de la trémie de manière à ce que ces barreaux 30 et 31 obturent toujours la base 7 de la trémie quelle que soit leur position. Les barreaux de chacune de ces deux séries sont assemblés entre eux par des barres 32, 33 afin que deux barreaux immédiatement voisins n'appartiennent pas à la même série (voir figures 4 et 5) et un vérin 34, 35 est prévu pour commander chacune de ces séries de barreaux en un mouvement de va-et-vient et afin qu'une série de barreaux se déplace dans un sens lorsque l'autre série de barreaux se déplace en sens opposé. Les cylindres 36 et 37 des vérins 34 et 35 sont parallèles et fixés au bâti 6, les extrémités 38 et 39 des tiges de piston étant chacune reliée à une série de barreaux, par un étrier 40, pour assurer son mouvement. Les vérins peuvent être commandés pour que les déplacements des séries de barreaux s'effectuent à la même vitesse dans chaque sens ou encore pour que la vitesse de la série de barreaux qui se déplace de l'ouverture 9 vers la paroi 28 soit supérieur à la vitesse de déplacement de la série de barreaux dans l'autre sens, ces barreaux sont guidés dans leurs déplacements par des galets 40' dont les axes sont supportés par le bâti 6.

La commande des vérins 34 et 35 est en outre agencée pour que les deux vérins puissent entraîner les deux séries de barreaux simultanément dans le sens de déplacement du ruban, mais cette commande interdit le déplacement simultané des deux séries de barreaux dans le sens contraire au sens de déplacement du ruban, c'est-à-dire que la commande autorise, pendant tout le temps où une série de barreaux se déplace de l'ouverture 9 vers la paroi 28, seulement le mouvement de l'autre série en sens opposé ou alors maintient cette dernière série à l'arrêt, en fin de course lorsqu'elle s'est déplacée de la paroi 28 vers l'ouverture 9.

Pour extraire les fibres de la masse de matière, les éléments 29 sont de forme triangulaire et sont, dans la forme de réalisation montrée aux figures 1 à 6, fixés aux barreaux 30 et 31, par leur base 41, suivant un plan vertical passant par l'axe longitudinal des barreaux. La forme des éléments 29 est telle que la projection sur le barreau du sommet 42 du triangle tombe en dehors de la base 41 de ce dernier et du côté de l'extrémité de la base la plus proche de l'ouverture 9 réalisée dans la trémie.

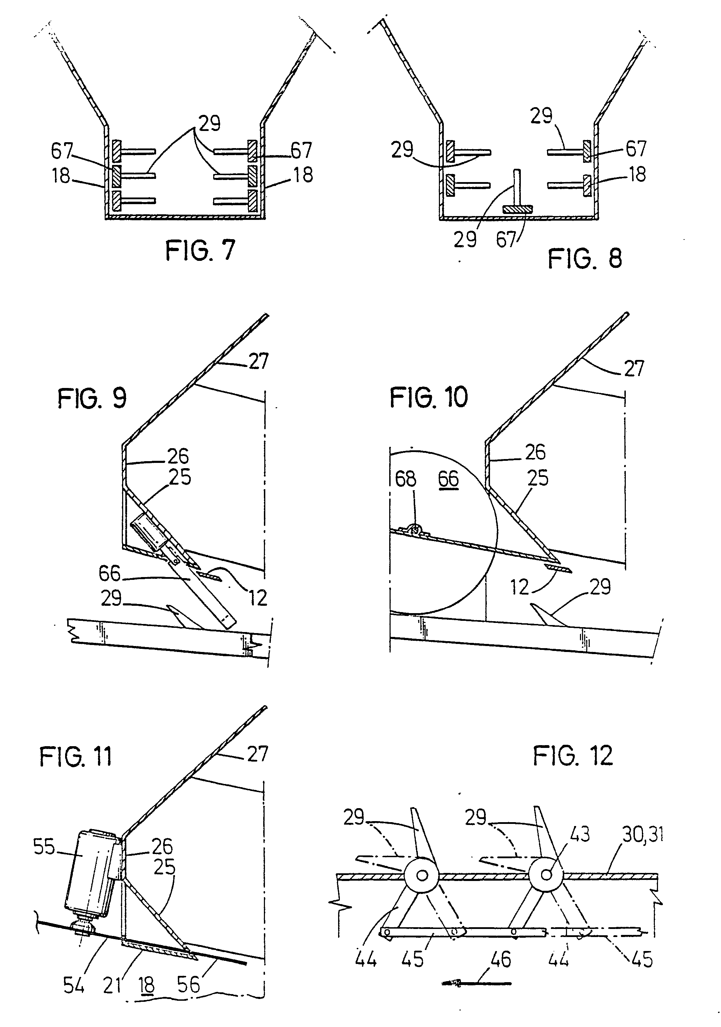

Les éléments 29 pourraient, comme montré à la figure 12, être articulés sur les barreaux 30 et 31 de manière à occuper deux positions extrêmes, une première position, représentée en traits pleins, dans laquelle ils font saillie par rapport aux barreaux quand ceux-ci se déplacent de l'intérieur de la trémie vers l'ouverture·9 et une seconde position, représentée en traits interrompus, dans laquelle ils se rabattent sur les barreaux lorsque ces derniers se déplacent de ladite ouverture 9 vers l'intérieur de la trémie. Ces éléments 29 sont montés à pivotement sur les barreaux grâce à un axe 43 et présentent un prolongement 44 situé à l'intérieur des barreaux. Tous les prolongements 44 des barreaux sont réunis par une tringle rigide 45 et les tringles 45 d'une série de barreaux sont réunies entre elles et commandées simultanément par un vérin. On constate que, lorsque le vérin pousse les tringles suivant la flèche 46, les éléments 29 font saillie par rapport aux barreaux et ceux-ci se déplacent vers l'ouverture 9 de la trémie. Par contre, lorsque les tringles sont actionnées par le vérin dans le sens opposé à la flèche 46 et que l'on freine les barreaux, les éléments 29 se rabattent sur lesdits barreaux en se déplaçant vers la paroi 28 de la trémie.

Dans les formes de réalisation du dispositif montrées aux figures 1 à 3 et 6, le couteau 12 est constitué par une lame droite, dont les extrémités 47 et 48 sont situées à l'extérieur de la trémie, qui est sensiblement parallèle à la base 7 de la trémie. Chacune de ces extrémités de la lame est articulée sur un support 49, fixé à la trémie, par l'intermédiaire d'une bielle 49', l'extrémité 48 de cette lame étant en outre reliée, pour assurer un mouvement de fauchage à la lame, à une bieille de commande 50 entraînée par l'intermédiaire d'un excentrique 51 calé sur l'arbre 52 d'un moteur réducteur 53.

Suivant l'invention, le couteau 12 pourrait aussi être, comme montré à la figure 11, un couteau rotatif 54 disposé sensiblement parallèlement à la base 7 de la trémie et commandé par un moteur réducteur 55, la portion 56 du couteau faisant saillie dans la trémie et jouant le même rôle que le couteau en forme de lame droite.

On pourrait également prévoir, suivant l'invention et comme montré aux figures 7 et 8, des éléments 29 disposés sensiblement perpendiculairement aux zones 18 des parois latérales précitées, ces éléments pouvant être combinés avec des éléments 29 verticaux (figure 8). Dans ce cas, le fond de la trémie est fermé. Les éléments 29 sont fixés sur des barreaux 67, certains de ces barreaux étant animés d'un mouvement alternatif comme décrit ci-dessus, les autres barreaux étant fixes ou encore tous ces barreaux étant mobiles et commandés de manière telle qu'il y ait toujours des barreaux qui se déplacent dans le sens du ruban ou qui soient à l'arrêt quand il y a des barreaux qui se déplacent en sens contraire de celui du ruban.

Les éléments coupants 66, supportés par la trémie en aval du couteau 12, agencés entre les éléments 29 pour couper les fibres trop longues et organiser les fibres sont soit, comme montré aux figures 1 et 2, fixes, soit mobiles. Dans ce dernier cas, ces éléments 66 peuvent être, comme montré à la figure 9, en forme de lame et animés d'un mouvement de va-et-vient à la manière d'une scie sauteuse ou, comme montré à la figure 10, en forme de disque entraîné en rotation autour d'un arbre 68.

Suivant l'invention, le dispositif comprend avantageusement des moyens 69 (figures 1 et 6) agencés pour assurer la descente de la matière vers la base de la trémie, tandis que la paroi 17 de la trémie (figure 6) est avantageusement convexe pour ramener la matière coupée par le couteau 12 au sein de la masse 2. Les moyens 69 montrés à la figure 1 sont constitués par des organes mobiles 70, en forme de cônes creux pour que la matière qui y pénètre se dégage facilement, commandés par des vérins 71 qui font pénétrer lesdits organes 70 au sein de la matière pour provoquer sa chute sur les éléments saillants 29. Ces moyens 69 peuvent également être constitués, comme montré à la figure 6 par des éléments saillants 71', analogues aux éléments 29 mais de hauteur plus importante que celle de ces derniers, disposés au moins sur les barreaux les plus proches des zones verticales 18 des parois latérales de la trémie. Ces éléments 71' sont disposés de manière telle qu'à fin de course ils n'atteignent pas le couteau 12. La trémie peut également présenter, conformément à l'invention et pour éviter les bourrages entre les éléments 29 ou les éléments 29 et 71' et sa paroi 28, une découpe 72 autorisant le passage des éléments 29 ou 29 et 71' (figure 6) au-delà de cette paroi 29. Pour éviter le passage de matière par cette découpe 72, le dispositif comprend un capot mobile 73 articulé sur la paroi 28 pour obturer ladite découpe. Ce capot est agencé pour reposer sur les barreaux 30 et 31, quelle que soit leur position, afin de couvrir les éléments saillants 29 et 71' quand ils se déplacent au-delà de la paroi 28 de la trémie, l'articulation 74 du capot étant prévue pour que ce dernier puisse être déplacé pour dégager la découpe susdite et les éléments 29 et 71' afin de faciliter l'entretien du dispositif.

Pour permettre le réglage de la section de l'ouverture 9 qui détermine la section du ruban 3 ainsi que le réglage du couteau 12 et des éléments coupants 66, la trémie est articulée sur le bâti autour d'un arbre 75 d'axe perpendiculaire au plan vertical passant par l'axe longitudinal d'un des barreaux 30, 31. Cet arbre 75 est situé à proximité immédiate de la paroi latérale 28 de la trémie opposée à l'ouverture 9 de manière à ce que le pivotement de la trémie autour de son axe permette de régler la hauteur de ladite ouverture, le bâti comprenant des moyens 76 permettant d'immobiliser la trémie en position choisie.

Les moyens 11 destinés à alimenter la trémie en matière sont constitués par une benne 57 articulée sur le bâti 6 et par des organes de commande de cette benne agencés sur ce bâti et sur la benne de part et d'autre de ces derniers pour que cette benne puisse occuper deux positions extrêmes, une position dans laquelle le plateau 58 de la benne est sensiblement horizontal et situé à une distance du sol telle que l'on puisse y déposer la matière à déverser dans la trémie et une position dans laquelle la benne est basculée au-dessus de la trémie pour que la matière tombe par gravité dans cette dernière. Les organes de commande susdits comprennent, de part et d'autre du bâti 6, un levier coudé 59 articulé en 60 sur ce bâti et relié, à une de ses extrémités, à un vérin 61 de relevage de la benne et, à son autre extrémité, à une articulation 62 prévue sur cette benne. Ces organes comprennent en outre, de part et d'autre du bâti 6, un vérin 63 de basculement de la benne articulé, en 64, sur le bâti et, en 65, sur la benne.

Il doit être entendu que l'invention n'est nullement limitée aux formes de réalisation décrites et que bien des modifications peuvent être apportées à ces dernières sans sortir du cadre du présent brevet.

C'est ainsi que le couteau 12 pourrait être constitué d'un élément coupant à ruban dont les poulies d'entraînement sont montées à l'extérieur de la trémie, de part et d'autre de cette dernière.

## Revendications

1. Procédé de chargement automatique de machines (1) traitant des matières en vrac présentant une certaine longueur et généralement comprimées en balles, en particulier matières telles que fibres, fils, débris de produits textiles tissés ou non tissés, matières plastiques, suivant lequel on extrait à la base d'une masse de matière (2), à l'aide d'éléments saillants (29) pénétrant dans la masse, une quantité de matière pour en former un ruban (3) qui est dirigé vers les machines précitées, ledit procédé étant caractérisé en ce qu'il consiste à disposer les éléments saillants (29) en au moins deux rangées s'étendant suivant la direction de déplacement du ruban (3), à animer au moins une de ces deux rangées d'éléments d'un mouvement alternatif suivant la direction de déplacement du ruban afin que cette rangée mobile d'éléments entraîne de la matière dans le sens de déplacement du ruban quand elle se déplace dans ce sens et que l'autre rangée d'éléments retienne la matière pour que celle-ci n'accompagne pas les éléments de la rangée mobile lorsque cette dernière se déplace en sens contraire de celui du ruban et à régler l'amplitude du mouvement susdit pour que la matière, extraite de la masse de matière par les éléments saillants (29), se déplace vers et au-delà d'une ouverture (9) dont la section correspond sensiblement à la section du ruban (3) à former, le mouvement des éléments saillants (29) s'étendant, lorsque ceux-ci se déplacent dans le sens de déplacement du ruban (3), jusqu'au-delà de cette ouverture (9).

2. Procédé suivant la revendication 1, caractérisé en ce qu'on anime les deux rangées d'éléments (29) sudites d'un mouvement alternatif suivant la direction de déplacement du ruban (3) et qu'on commande ces rangées de telle sorte qu'au moins une de ces rangées soit se déplace dans le sens du ruban, soit est à l'arrêt, pendant tout le temps du mouvement de l'autre rangée en sens contraire de celui du ruban.

3. Procédé suivant l'une ou l'autre des revendications 1 et 2, caractérisé en ce qu'on guide la matière extraite, de part et d'autre des rangées d'éléments (29) susdites et sur une distance au moins égale à l'amplitude du mouvement desdites rangées, pour former les bords latéraux du ruban (3) et on coupe la matière extraite, au-dessus des éléments (29) et en un endroit situé en amont de la fin de course des rangées d'éléments lorsqu'elles se déplacent dans le sens du ruban, pour délimiter la face supérieure (14) du ruban et en régler l'épaisseur, la matière excédentaire qui est coupée étant dirigée dans la masse de matière.

4. Procédé suivant la revendication 3, caractérisé en ce qu'on coupe le ruban (3) de matière entre l'endroit de coupe précité et la fin de course des rangées d'éléments (29) lorsqu'elles se déplacent dans le sens de déplacement du ruban, cette dernière coupe s'effectuant, dans un plan sensiblement vertical et parallèle à l'axe longitudinal du ruban, entre les rangées d'éléments susdites.

5. Dispositif pour la mise en œuvre du procédé suivant l'une quelconque des revendications 1 à 4, caractérisé en ce qu'il comprend une trémie (5), montée sur un bâti fixe (6), dont le sommet (6') est ouvert et qui présente, le long de son bord (8) le plus proche de la machine (1) à charger, une ouverture quadrangulaire (9) s'étendant à partir de la base (7) de la trémie et dont la section correspond sensiblement à la section du ruban de matière (3) à former, au moins deux rangées d'éléments saillants (29) agencées dans le fond de la trémie, sensiblement perpendiculairement au bord de la trémie le long duquel est ménagée l'ouverture (9) et à un niveau inférieur à celui du bord de l'ouverture opposé à la base de la trémie, au moins une de ces rangées d'éléments saillants (29) étant mobile, une commande pour entraîner la rangée d'éléments mobile en un mouvement alternatif suivant l'axe longitudinal du ruban (3) à former, l'amplitude de ce mouvement étant telle que les éléments saillants de la rangée se déplacent de la paroi de la trémie (5) opposée à l'ouverture (9) jusqu'au-delà de cette ouverture, et des moyens (11) pour approvisionner la trémie en matière.

6. Dispositif suivant la revendication 5, caractérisé en ce que les éléments saillants (29) sont agencés parallèlement au plan vertical passant par l'axe longitudinal du ruban de matière (3) à former.

7. Dispositif suivant la revendication 5, caractérisé en ce que les éléments saillants (29) sont agencés soit obliquement par rapport au plan vertical passant par l'axe longitudinal du ruban de matière (3) à former, soit perpendiculairement audit plan.

8. Dispositif suivant l'une quelconque des revendications 5 à 7, caractérisé en ce qu'il comprend un couteau (12) disposé à l'intérieur de la trémie et monté sur cette dernière, à proximité de l'ouverture (9), sensiblement parallèlement à la base (7) de la trémie et à une distance de cette base qui est légèrement inférieure à la distance séparant ladite base du bord (13) de l'ouverture (9) opposé à cette base et à un niveau supérieur à celui des éléments saillants (29) afin que les éléments mobiles puissent passer sous le couteau (12) lorsqu'ils entraînent la matière au-delà de l'ouverture (9).

9. Dispositif suivant l'une quelconque des revendications 5 à 8, caractérisé en ce qu'il comprend, dans la zone située entre les fins de course de la rangée d'éléments saillants (29) mobile, au moins un élément coupant (66) disposé entre les deux rangées d'éléments saillants.

10. Dispositif suivant l'une quelconque des revendications 5 à 9, caractérisé en ce que la base (7) de la trémie (5) est ouverte et est en forme de quadrilatère à quatre angles droits, l'ouverture (9) étant ménagée le long d'un des côtés de ce quadrilatère et les rangées d'éléments saillants (29) étant portées par au moins deux séries de barreaux mobiles (30 et 31) obturant la base (7) de la trémie et s'étendant perpendiculairement à l'ouverture (9), des guides étant prévus pour que les barreaux se déplacent suivant leur axe longitudinal, la dimension desdits barreaux, prise parallèlement à leur axe longitudinal, étant supérieure à la dimension correspondante de la base de la trémie de manière à ce que ces barreaux obturent toujours la base de la trémie quelle que soit leur position, les barreaux de chacune de ces deux séries étant assemblés entre eux et la commande prévue pour entraîner chacune de ces séries de barreaux en un mouvement de va-et-vient étant agencée pour qu'une série de barreaux se déplace dans un sens lorsque l'autre série de barreaux se déplace en sens opposé, cette commande étant en outre agencée pour que, pendant tout le temps du mouvement d'une des séries de barreaux en sens contraire de celui du ruban de matière, l'autre série soit se déplace dans le même sens que celui du ruban de matière, soit est à l'arrêt.

11. Dispositif suivant la revendication 10, caractérisé en ce que les parois latérales (15 et 16) de la trémie (5), s'étendant le long des côtés du quadrilatère adjacents au côté où est ménagée l'ouverture (9), ont chacune une zone verticale (18) s'étendant depuis la base (7) de la trémie jusqu'à une hauteur au moins égale à la hauteur de l'ouverture (9), cette zone verticale étant prolongée par une zone oblique (19) pour former l'évasement de la trémie, la dimension de l'ouverture (9) prise perpendiculairement à la direction de déplacement des barreaux (30 et 31) étant sensiblement égale à la distance séparant les zones verticales (18).

12. Dispositif suivant la revendication 11, caractérisé en ce que les zones verticales (18) des parois latérales (15 et 16) présentent la forme d'un triangle dont le sommet est situé sur le côté de la base de la trémie opposé à l'ouverture (9) et dont la base est confondue avec un bord de cette ouverture.

13. Dispositif suivant l'une ou l'autre des revendications 11 et 12, caractérisé en ce que la trémie (5) comprend, le long du bord (20) de l'ouverture (9) opposé à la base (7) de la trémie, une tôle de guidage (21), pour la face supérieure du ruban de matière, qui s'étend à l'intérieur de la trémie et réunit les zones verticales (18), le couteau (12) étant disposé à proximité du bord (22) de cette tôle opposé à l'ouverture, la distance séparant ce bord (22) de la base (7) de la trémie étant légèrement inférieure à la distance séparant le bord de cette tôle (21) proche de l'ouverture (9) de ladite base.

14. Dispositif suivant la revendication 13, caractérisé en ce que la paroi (17) de la trémie (5) située au-dessus de l'ouverture (9) est convexe et s'étend, depuis le couteau (12), au-dessus de la tôle de guidage (21) de manière à ramener la matière coupée par le couteau dans la masse de matière reposant sur les barreaux (30 et 31).

15. Dispositif suivant l'une quelconque des revendications 10 à 14, caractérisé en ce que la paroi (28) de la trémie (5) opposée à l'ouverture (9) présente une découpe (72) autorisant le passage des éléments saillants (29) au-delà de cette paroi lorsque lesdits éléments se déplacent en sens contraire de celui du ruban (3), les dimensions de cette découpe correspondant sensiblement aux dimensions de l'ouverture (9).

16. Dispositif suivant la revendication 15, caractérisé en ce que la trémie comprend un capot mobile articulé (73) à l'extérieur de la trémie pour obturer la découpe (72), ce capot étant agencé pour reposer sur les barreaux (30 et 31), quelle que soit leur position, afin de couvrir les éléments saillants (29) quand ils se déplacent au-delà de la paroi (28) de la trémie présentant la découpe, l'articulation (74) du capot étant prévue pour que ce dernier puisse être déplacé pour dégager la découpe (72).

17. Dispositif suivant l'une quelconque des revendications 10 à 16, caractérisé en ce que les séries de barreaux (30 et 31) sont agencées pour que deux barreaux immédiatement voisins n'appartiennent pas à la même série.

18. Dispositif suivant l'une quelconque des revendications 10 à 17, caractérisé en ce qu'il comprend un élément coupant (66) agencé entre les rangées d'éléments saillants (29) montés sur les barreaux (30 et 31), ces éléments coupant étant portés par la trémie (5) et disposés, entre le couteau (12) et l'ouverture (9), dans l'espace compris entre la tôle de guidage (21) et les barreaux mobiles.

19. Dispositif suivant l'une quelconque des revendications 5 à 18, caractérisé en ce qu'il comprend des moyens (69) agencés pour assurer la descente de la matière vers la base (7) de la trémie (5).

20. Dispositif suivant la revendication 19, caractérisé en ce que les moyens (69) sont constitués par des éléments saillants (71') disposés au moins sur les barreaux les plus proches des parois latérales (15 et 16) de la trémie parallèles auxdits barreaux, ces éléments saillants ayant une hauteur supérieure aux autres éléments saillants (29) et étant montés sur les barreaux de manière telle que l'amplitude de leur mouvement soit limitée soit à l'intérieur de la trémie, soit à l'intérieur de cette dernière et au-delà de la paroi (28) de la trémie opposée à l'ouverture (9), la découpe (72) présentée par cette paroi (28) étant, dans ce dernier cas, d'une hauteur suffisante pour permettre le passage desdits éléments saillants (71').

21. Dispositif suivant la revendication 20, caractérisé en ce que les éléments saillants (29 et 71') sont de forme triangulaire et sont fixés aux barreaux par leur base suivant un plan vertical passant par l'axe longitudinal des barreaux, la forme des éléments étant telle que la projection sur le barreau du sommet du triangle tombe en dehors de la base de ce dernier et du côté de l'extrémité de la base la plus proche de l'ouverture (9) réalisée dans la trémie (5).

22. Dispositif suivant la revendication 20, caractérisé en ce que les éléments saillants (29) sont articulés sur les barreaux (30 et 31) de manière à occuper deux positions extrêmes, une première position dans laquelle ils font saillie par rapport aux barreaux lorsque ceux-ci se déplacent de l'intérieur de la trémie vers l'ouverture (9) et une seconde position dans laquelle ils se rabattent sur les barreaux lorsque ces derniers se déplacent de ladite ouverture vers l'intérieur de la trémie.

23. Dispositif suivant l'une quelconque des revendications 8 à 22, caractérisé en ce que le couteau (12) est constitué par une lame droite dont les extrémités (47 et 48) sont situées à l'extérieur de la trémie et qui est sensiblement parallèle à la base (7) de la trémie, chacune des extrémités de la lame étant articulée sur un support (49) fixé à la trémie par l'intermédiaire d'une bielle (49'), une des extrémités de cette lame étant en outre reliée, pour assurer un mouvement de fauchage à la lame, à une bielle de commande (50) entraînés par le biais d'un excentrique (51) calé sur l'arbre (52) d'un moteur réducteur (53).

24. Dispositif suivant l'une quelconque des revendications 8 à 22, caractérisé en ce que le couteau est un couteau rotatif (54) disposé sensiblement parallèlement à la base (7) de la trémie, ce couteau étant supporté par la trémie ainsi que son moteur de commande (55).

25. Dispositif suivant l'une quelconque des revendications 20 à 24, caractérisé en ce que les moyens (69) agencés pour assurer la descente de la matière vers la base de la trémie comprennent des organes mobiles (70) supportés par les parois de la trémie et commandés pour se déplacer par rapport à ces dernières entre deux positions extrêmes, une position dans laquelle ils sont en contact avec les parois et une position où ils sont écartés de ces dernières pour s'enfoncer au sein de la masse de matière afin de rompre les ponts qui pourraient s'y former.

26. Dispositif suivant l'une quelconque des revendications 10 à 25, caractérisé en ce que la trémie (5) est articulée sur le bâti (6) autour d'un axe perpendiculaire au plan vertical passant par l'axe longitudinal d'un des barreaux (30 et 31), cet axe (75) étant situé à proximité immédiate de la paroi latérale (28) de la trémie opposée à l'ouverture (9) de manière à ce que le pivotement de la trémie autour de cet axe permette de régler la hauteur de cette ouverture (9), le bâti (6) comprenant des moyens permettant d'immobiliser la trémie (5) en position choisie.

27. Dispositif suivant l'une quelconque des revendications 5 à 26, caractérisé en ce que les moyens (11) destinés à alimenter la trémie (5) en matière sont constitués par une benne (57) articulée sur le bâti (6) et par des organes de commande de cette benne agencés sur ce bâti et sur la benne pour que cette dernière puisse occuper deux positions extrêmes, une première position dans laquelle le plateau (58) de la benne est sensiblement horizontal et situé à une distance du sol telle que l'on puisse y déposer la matière à déverser dans la trémie et une seconde position dans laquelle la benne est basculée au-dessus de la trémie pour que la matière tombe par gravité dans cette dernière.

**Claims**

1. Method for loading automatically machines for treating bulk materials having some length and generally pressed into bales, particularly materials such as fibres, yarns, fragments from woven or unwoven textiles, plastics, comprising extracting from the bottom of a material mass (2), by means of projecting elements (29) entering said mass, an amount of material to be formed into a strip (3) which is fed to said machines, which method further comprises arranging said projecting elements (29) in at least two rows extending along the strip (3) movement direction, imparting to at least one element row an alternating motion along the strip movement direction to let said movable element row convey the material along the strip movement direction as said row moves along said direction, and the other element row retains the material to prevent same from moving together with the elements from said movable row as said row moves in the direction opposite to the strip movement direction and regulating the movement magnitude so as to let the material, extracted out the material mass by projecting elements (29), move towards and beyond an opening (9), the cross-section of which substantially corresponding to the section of that material strip (3) to be formed, the projecting elements (29) movement extending beyond this opening (9) when these elements move along the strip (3) movement direction.

2. Method as defined in claim 1, which further comprises imparting to both said elements (29) rows an alternating motion along the strip (3) movement direction, and so controlling said rows as to have at least one row either moving along the strip movement direction or lying at rest, during the whole time interval where the other row moves in the direction opposite to the strip.

3. Method as defined in any one of claims 1 and 2, which further comprises guiding the material being extracted, on either side of said element (29) rows and over a distance at least equal to the movement magnitude of said rows, to form the strip (3) side edges, and the material being extracted is cut above said element (29) and in a location lying upstream of the stroke end of said element rows as they move along the strip movement direction, to define the upper surface (14) of said strip and adjust the thickness thereof, the excess material having been cut being returned to the material mass.

4. Method as defined in claim 3, which further comprises cutting the material strip (3) between said cutting location and the stroke end of the elements (29) rows as they move along the strip movement direction, said latter cut being performed in a substantially vertical plane in parallel relationship with the strip lenghtwise axis.

5. Device for the working of the method as defined in any one of claims 1 to 4, which comprises a hopper (5) mounted on a fixed frame (6), the frame top (6') being open and along the frame edge (8) nearest the machine (1) to be loaded is provided a quadrangular opening (9) extending from the hopper bottom (7) and the cross-section of which substantially corresponds to the cross-section of the material strip (3) to be formed, at least two rows of projecting elements (29) arranged in the hopper bottom, substantially at right angle to that hopper edge along which said opening (9) is provided and at a lower level than that opening edge opposite the opper bottom, at least the one projecting element (29) row being movable, control means to drive the movable element row with an alternating motion along the lenghtwise axis of the strip (3) to be formed, said motion having such a magnitude that the projecting elements from said row move from that hopper (5) wall opposite said opening (9) to beyond said opening, and means (11) to feed material to said hopper.

6. Device as defined in claim 5, in which said projecting elements (29) are arranged in parallel relationship with that vertical plane which passes through the lenghtwise axis of the material strip (3) to be formed.

7. Device as defined in claim 5, in which said projecting elements (29) are arranged either at an angle to that vertical plane which passes through the lenghtwise axis of the material strip (3) to be formed, or at right angle to said plane.

8. Device as defined in any one of claims 5 to 7, which further comprises a knife (12) arranged inside the hopper and mounted thereon adjacent said opening (9), substantially in parallel relationship with the hopper bottom (7) and at distance from said bottom which is slightly shorter than the spacing between that opening (9) edge (13) opposite said bottom, and at a higher level than the projecting elements (29) to let the movable elements pass below said knife (12) as they drive the material beyond the opening (9).

9. Device as defined in any one of claims 5 to 8, which further comprises in that zone lying between the stroke ends of the movable projecting element (29) rows, at least one cutting element (66) lying between both projecting element rows.

10. Device as defined in any one of claims 5 to 9, in which the hopper (5) bottom (7) is open and shaped as a quadrilateral with four right angles, said opening (9) being provided along the one quadrilateral side, and the projecting element (29) rows being supported by at least two series of movable bars (30 and 31) closing-off the hopper bottom (7) and extending as right angle to said opening (9), guides being provided to let the bars move along the lenghtwise axis thereof, the size of said bars as considered in parallel relationship with the lenghtwise direction thereof being longer than the corresponding size of the hopper bottom, in such a way that said bars always close-off the hopper bottom whatever be the position thereof, the bars in each one of both series thereof being connected together and the control means provided to drive each such bar series with a to-and-fro movement being so arranged that as the one bar series moves in one direction, the other bar series moves in the opposite direction, said control means being moreover so arranged that during the complete time interval where the one bar series moves in the direction opposite to the strip movement direction, the other bar series either moves in the same direction as the material strip or is stopped.

11. Device as defined in claim 10, in which the hopper (5) side walls (15 and 16) extending along those quadrilateral sides adjacent to the side where said opening (9) is provided, each have a vertical zone (18) extending from the hopper bottom (7) to a height which is at least equal to the opening (9) height, said vertical zone being extended with a slanting zone (19) to form the hopper flare, the opening (9) size as considered at right angle to said bar (30 and 31) movement direction being substantially equal to the spacing between said vertical zones (18).

12. Device as defined in claim 11, in which said side wall (15 and 16) vertical zones (18) are in the shape of a triangle the apex of which lies on that hopper bottom side which lies opposite said opening (9), and the base of which merges with the one opening side.

13. Device as defined in any one of claims 11 and 12, in which the hopper (5) comprises along that opening (9) edge (20) opposite the hopper bottom (7), a guide sheet (21) for the material strip upper surface, which extends inside the hopper and joins said vertical zones (18) the knife (12) being arranged adjacent that sheet edge (22) which lies opposite said opening, the spacing between said latter edge (22) and the hopper bottom (7) being slightly smaller than the spacing between that sheet (21) edge adjacent the opening (9) and said bottom.

14. Device as defined in claim 13, in which that hopper (5) wall (17) lying above said opening (9) is convex and extends from the knife (12) above said guide sheet (21), in such a way as to return that material being cut by said knife, in that material mass bearing on said bars (30 and 31).

15. Device as defined in any one of claims 10 to 14, in which that hopper (5) wall (28) opposite said opening (9) is provided with a cut-out (72) to let the projecting elements (29) pass beyond said wall as said elements move in the opposite direction to the strip (3), the size of said cut-out corresponding substantially to the size of said opening (9).

16. Device as defined in claim 15, in which the hopper comprises a movable hood (73) hinged outside the hopper to close-off said cut-out (72), said hood being so arranged as to bear on said bars (30 and 31), whatever be the position thereof, to cover said projecting elements (29) as same move beyond that hopper wall (28) which is provided with the cut-out, the hood hinge (74) being so arranged as to allow moving said hood for uncovering said cut-out (72).

17. Device as defined in any one of claims 10 to 16, in which said element rows (30 and 31) are so arranged as to have two directly adjacent bars not belonging to the same series.

18. Device as defined in any of claims 10 to 17, which further comprises a cutting element (66) arranged between the element (29) rows mounted on said bars (30 and 31), said cutting elements being supported by the hopper (5) and arranged between said knife (12) and opening (9), in that space lying between said guide sheet (21) and movable bars.

19. Device as defined in any one of claims 5 to 18, which further comprises means (69) so arranged as to insure the material falling down to the hopper (5) bottom (7).

20. Device as defined in claim 19, in which said means (69) are comprised of projecting elements (71') which are at least arranged on those bars nearest the hopper side walls (15 and 16) in parallel relationship with said bars, said projecting elements having a height which is higher thant the other projecting elements (29) and being mounted on the bars in such a way that the movement magnitude thereof be limited either inside the hopper or outside the hopper, and beyond that hopper wall (28) opposite said opening (9), said cut-out (72) provided in said wall (28) having in such latter case a height high enough to let said projecting elements (71) pass through.

21. Device as defined in claim 20, in which said projecting elements (29 and 71') are of triangular shape and are secured to the bars, with the base thereof along a vertical plane passing through the bar lenthwise axis, the elements being so shaped that the projection on the bar of said triangle apex falls outside the triangle base and on the side of that base end nearest said opening provided in the hopper (5).

22. Device as defined in claim 20, in which said projecting elements (29) are hinged to said bars (30 and 31) in such a way as to lie in two end positions, namely a first position in which said elements project relative to the bars as same move from inside the hopper towards said opening (9) and a second position in which said elements fall back on the bars as same move from said opening towards inside the hopper.

23. Device as defined in any one of claims 8 to 22, in which said knife (12) is comprised of a straight blade the ends (47 and 48) of which lie outside the hopper, and which lies substantially in parallel relationship with the hopper bottom (7), each blade end being hinged to a support (49) fast to the hopper through a link (49'), the one blade end being moreover connected to impart a sweeping motion to said blade, to a control link (50) which is driven through an eccentric (51) keyed to the shaft (52) of a reducing-gear motor (53.

24. Device as defined in any one of claims 8 to 22, in which said knife is a rotating knife (54) lying substantially in parallel relationship with the hopper bottom (7), said knife being supported by said hopper together with the driving motor (55) thereof.

25. Device as defined in any one of claims 20 to 24, in which said means (69) provided to insure the material fall to the hopper bottom, are comprised of movable members (70) supported by the hopper walls and so controlled as to move relative thereto between two end positions, one position in which said members engage the walls, and one position where said members are moved away from said walls to enter said material mass to the core thereof for breaking those bridges which might form therein.

26. Device as defined in any one of claims 10 to 25, in which said hopper (5) is hinged to the frame (6) about an axis at right angle to that vertical plane passing through the lenghtwise axis of the one said bars (30 and 31), said axis (75) lying directly adjacent to that hopper side wall (28) opposite to said opening (9), in such a way that swinging of the hopper about said axis allows adjusting said opening (9) in the height, the frame (6) comprising means for locking the hopper (5) in the selected position thereof.

27. Device as defined in any one of claims 5 to 26, in which said means (11) for feeding material to the hopper (5) comprise a bucket (57) hinged to said frame (6), and means for controlling said bucket arranged on said frame and on the bucket to let said bucket take two end positions, namely a first position in which the bucket tray (58) lies substantially horizontally at such a distance from the ground that the material to be fed to the hopper, can be discharged thereon, and a second position in which said bucket is tipped over the hopper to let material fall by gravity therein.

**Patentansprüche**

1. Verfahren zum automatischen Beladen von Maschinen (1) zur Behandlung von losen Materialien, die eine gewisse Länge aufweisen und im allgemeinen in Ballen zusammengepreßt sind, insbesondere Materialien wie Fasern, Fäden, Reste aus gewebten oder ungewebten Textil-Produkten, sowie Kunststoffe, wonach aus der unteren Lage einer Rohstoffmasse (2) mit Hilfe hervorstehender Elemente (29), die in die Masse hineingreifen, eine Rohstoff-Menge zur Bildung eines Bandes (3), das zu den vorgenannten Maschinen hinläuft, entnommen wird, wobei das genannte Verfahren dadurch gekennzeichnet ist, daß es daraus besteht, die hervorstehenden Elemente (29) in mindestens zwei Reihen, die sich je nach Ablaufrichtung des Bandes (3) erstrecken, einzuordnen, mindestens eine dieser beiden Elementenreihen einer wechselseitigen Bewegung in der Ablaufrichtung des Bandes zu unterwerfen, damit das Material, falls es sich in die gleiche Richtung wie das Band bewegt, durch diese bewegliche Elementenreihe in Ablaufrichtung des Bandes mitgenommen wird und damit die andere Elementenreihe das Material, das nicht mit der beweglichen Elementenreihe mitgehen darf, zurückhält, falls Letztgenannte sich in Gegenrichtung des Bandes bewegt, und die Amplitude der vorgenannten Bewegung einzustellen, damit der von den hervorstehenden Elementen (29) aus der Rohstoff-Masse gewonnene Materialien-Anteil sich in Richtung und über eine Öffnung (9) hinaus bewegt, deren Querschnitt im wesentlichen dem Querschnitt des zu bildenden Bandes (3) entspricht, wobei die Bewegung der herausragenden Elemente (29) sich bis über diese Öffnung (9) hinaus erstreckt, wenn sich die genannten Elemente in Richtung des bandablaufes bewegen.

2. Verfahren gemäß Anspruch 1, dadurch gekennzeichnet, daß die beiden vorgenannten Elementenreiehen (29) einer wechselseitigen Bewegung je nach Richtung des Bandablaufes (3) unterworfen sind und daß diese Reihen so gesteuert sind, daß mindestens eine dieser Reihen sich während der Gesamtbewegungszeit der anderen und zwar in entgegengesetzter Richtung zum Band entweder in Bandrichtung bewegt oder stehenbleibt.

3. Verfahren gemäß des einen oder anderen der Ansprüche 1 und 2, dadurch gekennzeichnet, daß das herausgenommene Material beiderseitig entlang der vorgenannten Elementenreihe (29) geführt wird und zwar auf einer Entfernung, die mindestens der Amplitude der Bewegung genannter Reihen gleich ist, um die seitlichen Kanten des Bandes (3) zu bilden, und daß das herausgenommene Material oberhalb der Elemente (29) an einem der Endlagen der sich in Bandrichtung bewegenden Elementenreihe vorgestellten Punkt geschnitten wird, um die obere Fläche (14) des Bandes abzugrenzen und deren Stärke einzustellen, wobei der abgeschnittene, überflüssige Rohstoff in die Materialmasse geführt wird.

4. Verfahren nach Anspruch 3, dadurch gekennzeichnet, daß das Rohstoff-Band (3) zwischen der vorgenannten Schnittstelle und der Endlage der sich in Ablaufrichtung des Bandes bewegenden Elementenreihe (29) geschnitten wird, wobei dieser letzte Schnitt in einer weitgehend senkrechten und parallel zur Längsachse des Bandes verlaufenden Ebene zwischen den vorgenannten Elementenreihen ausgeführt wird.

5. Vorrichtung für die Anwendung des Verfahrens gemäß irgend einem der Ansprüche 1-4, dadurch gekennzeichnet, daß sie aus einem auf einem festen Rahmen (6) montierten Trichter (5) besteht, dessen oberes Teil (6') offensteht und entlang seiner der zu beladenden Maschine (1) am nächsten verlaufenden Kante (8) eine viereckige Öffnung (9), die sich von der Grundfläche (7) des Trichters aus erstreckt und deren Querschnitt ziemlich dem Querschnitt des zu bildenden Materialbandes (3) entspricht, mindestens zwei Reihen hervorstehender Elemente (29), die am Boden des Trichters ziemlich senkrecht zur Trichterkante, entlang deren die Öffnung (9) angeordnet ist, und zwar in einer Höhe, die unterhalb der Höhe der dem Trichterboden gegenüberliegenden Öffnungskanten liegt, wobei mindestens eine dieser Reihen mit hervorstehenden Elementen (29) beweglich ist, sowie einen Antrieb, um die bewegliche Elementenreihe in eine wechselseitige Bewegung auf der Längsachse des zu bildenden Bandes (3) zu bewege, wobei die Amplitude dieser Bewegung derart ist, daß die hervorstehenden Elemente der Reihe sich von der der Öffnung (9) gegenüberliegenden Trichterwand (5) bis über diese Öffnung hinaus bewegt und schließlich Einrichtungen (11) zur Versorgung des Trichters mit Rohstoffen aufweist.

6. Vorrichtung gemäß Anspruch 5, dadurch gekennzeichnet, daß die hervorstehenden Elemente (29) parallel zu der mit der Längsachse des zu bildenden Rohstoffbandes (3) übereinstimmenden senkrechten Ebene angeordnet sind.

7. Vorrichtung gemäß Anspruch 5, dadurch gekennzeichnet, daß die hervorstehenden Elemente (29) entweder schräg zu der mit der Längsachse des zu bildenden Rohstoffbandes (3) übereinstimmenden senkrechten Ebene oder senkrecht zur genannten Ebene angeordnet sind.

8. Vorrichtung gemäß irgend einem der Ansprüche 5-7, dadurch gekennzeichnet, daß sie ein Messer (12) enthält, das innerhalb des Trichters angebracht und auf diesem neben der Öffnung (9) montiert ist und zwar ziemlich parallel zur Grundfläche (7) des Trichters und in einer Entfernung zu dieser Grundfläche, die etwas kleiner ist als die Entfernung zwischen der genannten Grundfläche einerseits und der Kante (13) der dieser Grundfläche gegenüberliegenden Öffnung (9) andererseits und in einer Höhe, die größer ist als die der hervorstehenden Elemente (29), damit die beweglichen Elemente unter dem Messer (12) hindurchgehen können, während sie das Material über die Öffnung (9) hinaus mitnehmen.

9. Vorrichtung gemäß irgend einem der Ansprüche 5-8, dadurch gekennzeichnet, daß die zwischen den Reihenendlagen der beweglichen hervorstehenden Elemente (29) liegende Zone mindestens ein zwischen beiden Reihen der hervorstehenden Elemente angebrachtes Schneidelement (66) enthält.

10. Vorrichtung gemäß irgend einem der Ansprüche 5-9, dadurch gekennzeichnet, daß die Grundfläche (7) des Trichters (5) geöffnet ist und die Form eines Viereckes mit vier Rechtwinkel hat, wobei die Öffnung (9) entlang einer der Seiten dieses Viereckes angebracht ist und die Reihen der hervorstehenden Elemente (29) von mindestens zwei Reihen beweglicher Stäbe (30 und 31), die die Grundfläche (7) des Trichters verschließt und sich senkrecht zur Öffnung (9) erstrecken, getragen sind, wobei Führungen zum Verschieben der Stäbe auf ihrer Längsachse vorgesehen sind und die Abmessung der genannten Stäbe, parallel zu ihrer Längsachse gemessen, größer ist als die entsprechende Abmessung der Grundfläche des Trichters, damit diese Stäbe immer die Grundfläche des Trichters ungeachtet ihrer Lage versperren, wobei die Stäbe jeder dieser beiden Serien untereinander verbunden sind und der Antrieb jeder dieser einer Hin- und Her-Bewegung unterworfenen Stäbereihe so angeordnet ist, daß eine Stäbereihe sich in eine Richtung bewegt, während die andere Stäbereihe sich in gegenläufige Richtung bewegt, wobei dieser Antrieb ausserdem so eingerichtet ist, daß während der Gesamtdauer der Bewegung einer der Stäbereihe in Gegenrichtung der des Rohstoffbandes, die andere Reihe sich entweder in die gleichen Richtung wie die des Rohstoffbandes bewegt oder stillsteht.

11. Vorrichtung gemäß Anspruch 10, dadurch gekennzeichnet, daß jede der seitlichen Wandungen (15 und 16) des Trichters (5), die sich entlang der Seiten des der Öffnungsseite (9) anliegenden Vierecks erstrecken, eine senkrechte Zone (18) aufweist, die sich von der Grundfläche (7) des Trichters aus bis zu einer Höhe, die mindestens der Höhe der Öffnung (9) gleicht, erstreckt, wobei diese senkrechte Zone durch eine schräge Zone (19) zur Erweiterung des Trichters verlängert ist und die Größe der Öffnung (9), senkrecht zur Bewegungsrichtung der Stäbe (30 und 31) gemessen, ziemlich der Entfernung zwischen den senkrechten Zonen (18) gleich ist.

12. Vorrichtung gemäß Anspruch 11, dadurch gekennzeichnet, daß die senkrechten Zonen (18) der seitlichen Wandungen (15 und 16) die Form eines Dreieckes haben, dessen Spitze seitlich auf der der Öffnung (9) gegenüberliegenden Trichtergrundfläche liegt und dessen Grundlinie mit der Kante dieser Öffnung zusammenläuft.

13. Vorrichtung gemäß dem einen oder anderen der Ansprüche 11 und 12, dadurch gekennzeichnet, daß der Trichter (5) entlang der Kante (20) der der Trichtergrundfläche (7) gegenüberliegenden Öffnung (9) ein Führungsblech (21) enthält, und zwar für die obere Fläche des Rohstoffbandes, das sich innerhalb des Trichters erstreckt und die senkrechten Zonen (18) vereint, wobei das Messer (12) in der Nähe der Kante (22) dieses, der Öffnung gegenüberliegenden Bleches liegt und die Entfernung zu dieser Kante (22) der Trichtergrundfläche (7) etwas kleiner als die Entfernung zu der Kante dieses Bleches (21) nahe der Öffnung (9) der genannten Grundfläche ausfällt.

14. Vorrichtung gemäß Anspruch 13, dadurch gekennzeichnet, daß die oberhalb der Öffnung (9) liegende Wandung (17) des Trichters (5) konvex ist und sich vom Messer (12) aus oberhalb des Führungsbleches (21) so erstreckt, daß das vom Messer geschnittene Material in die auf den Stäben (30 und 31) liegende Materialmasse zurückgeführt wird.

15. Vorrichtung gemäß irgendeinem der Ansprüche 10-14, dadurch gekennzeichnet, daß die gegenüber der Öffnung (9) liegende Wandung (28) des Trichters (5) einen Ausschnitt (72) zum Durchgang der hervorstehenden Elemente (29) über diese Wandung hinaus aufweist, während die genannten Elemente sich in Gegenrichtung zu den des Bandes (3) bewegen, wobei die Abmessungen dieses Ausschnittes merklich den Abmessungen der Öffnung (9) entsprechen.

16. Vorrichtung gemäß Anspruch 15, dadurch gekennzeichnet, daß der Trichter eine bewegliche Gelenkhaube (73) ausserhalb des Trichters zum Verschliessen des Ausschnittes (72) enthält, wobei diese Haube so angeordnet ist, daß sie auf den Stäben (30 und 31) ungeachtet deren Position liegt, um die hervorstehenden Elemente (29) zu bedecken, wenn sie sich über die mit dem Ausschnitt versehene Trichterwandung (28) hinaus bewegen, da das Haubengelenk (74) so vorgesehen ist, daß die Haube, um den Ausschnitt (72) zu vergößern, verschoben werden kann.

17. Vorrichtung gemäß irgendeinem der Ansprüche 10-16, dadurch gekennzeichnet, daß die Stäbereihen (30 und 31) so angebracht sind, daß zwei unmittelbar benachbarte Stäbe nicht zu der gleichen Reihe gehören.

18. Vorrichtung gemäß irgend einem der Ansprüche 10-17, dadurch gekennzeichnet, daß sie ein zwischen den Reihen der auf den Stäben (30 und 31) montierten, hervorstehenden Elemente (29) angebrachtes Schneidelement (66) enthält, wobei diese Schneidelemente von dem Trichter (5) getragen und zwischen dem Messer (12) und der Öffnung (9) in dem Zwischenraum zwischen Führungsblech (21) und beweglichen Stäben angebracht sind.

19. Vorrichtung gemäß irgend einem der Ansprüche 5-18, dadurch gekennzeichnet, daß sie zur Sicherung des Abganges des Materials in Richtung Grundfläche (7) des Trichters (5) angeordnete Einrichtungen (69) enthält.

20. Vorrichtung gemäß Anspruch 19, dadurch gekennzeichnet, daß die Einrichtungen (69) aus hervorstehenden Elementen (71') bestehen, die mindestens auf die seitlichen und parallel zu den Stäben und zu den nächstliegenden Wandungen (15 und 16) des Trichters angebracht sind, wobei diese hervorstehenden Elemente eine Höhe aufweisen, die höher ist als die der anderen hervorstehenden Elemente (29) und so auf die Stäbe montiert sind, daß die Amplitude ihre Bewegung entweder innerhalb des Trichters oder innerhalb der letztgenannten und über der der Öffnung (9) gegenüberliegenden Wandung (28) des Trichters hinaus begrenzt ist und der Ausschnitt (72) in dieser Wandung (28) im letzten Fall eine genügende Höhe zum Durchgang der genannten, hervorstehenden Elemente (71') aufweist.

21. Vorrichtung gemäß Anspruch 20, dadurch gekennzeichnet, daß die hervorstehenden Elemente (29 und 71') dreieckig sind und über ihrer Grundfläche an den Stäben in einer senkrechten Ebene, die mit der Längsachse verläuft, befestigt sind, wobei die Ausführungsform der Elemente so ist, daß die Projektion der Dreiecksspitze auf dem Stab außerhalb der Grundfläche dieses Dreieckes auf dem Stab außerhalb der Grundfläche dieses Dreieckes und auf der Seite des der Öffnung (9) in den Trichter (5) am nächsten liegenden Endes der Grundfläche fällt.

22. Vorrichtung gemäß Anspruch 20, dadurch gekennzeichnet, daß die hervorstehenden Elemente (29) so auf den Stäben (30 und 31) angelenkt sind, daß sie zwei extreme Lagen annehmen können, nämlich eine erste Lage, in der sie im Vergleich zu den Stäben hervorstehen, wenn diese sich vom Innern des Trichters zur Öffnung (9) hinbewegen und eine zweite Lage, in der sie sich auf die Stäbe herunterklappen, wenn diese sich auf die Öffnung zum Innern des Trichters hinbewegen.

23. Vorrichtung gemäß irgend einem der Ansprüche 8-22, dadurch gekennzeichnet, daß das Messer (12) aus einem geraden Schneidblatt, dessen Enden (47 und 48) ausserhalb des Trichters liegen, besteht, und das ziemlich gerade zur Grundfläche (7) des Trichters liegt, wobei jedes Ende des Schneidblattes auf einem Halter (49) angelenkt ist, der mittels Treibstange (49') auf dem Trichter befestigt ist, während ein Ende dieses Schneidblattes ausserdem, um eine sensartige Bewegung des Schneidblattes zu erreichen, mit einer Triebstange (50), die von einem Exzenter (51), der auf der Welle (52) eines Getriebemotors (53) festsitzt, angetrieben wird, verbunden ist.

24. Vorrichtung gemäß irgend einem der Ansprüche 8-22, dadurch gekennzeichnet, daß das Messer ein Drehmesser (54) ist, das ziemlich parallel zur Grundfläche (7) des Trichters steht, wobei dieses Messer vom Trichter sowie von seinem Antriebsmotor (55) getragen wird.

25. Vorrichtung gemäß irgend einem der Ansprüche 20-24, dadurch gekennzeichnet, daß die Einrichtungen (69), um das Herunterfallen des Materials auf die Trichtergrundfläche zu begünstigen, bewegliche Organe (70) enthalten, die von den Trichterwandungen getragen und so angetrieben sind, daß sie sich zu diesen Trichterwandungen zwischen zwei extremen Lagen bewegen, nämlich einer Lage, in der sie die Wandungen berühren und einer Lage, in der sie von diesen Wandungen entfernt sind, um in die Materialmasse einzudringen, und die Brücken, die sie darin bilden könnten, zu brechen.

26. Vorrichtung gemäß irgend einem der Ansprüche 10-25 dadurch gekennzeichnet, daß der Trichter (5) auf dem Gestell (6) um eine zu der vertikalen sich mit der Längsachse eines der Stäbe (30, 31) überdeckendene Ebene senkrecht stehende Achse drehbar angeordnet ist, wobei diese Achse (75) in unmittelbarer Nähe der der Öffnung (9) gegenüberliegenden seitlichen Wandung (28) des Trichters so liegt, daß die Schwenkbewegung des Trichters um diese Achse das Einregulieren der Höhe dieser Öffnung (9) zuläßt, wobei das Gestell (6) Einrichtungen zum Feststellen des Trichters (5) in der gewählten Lage besitzt.

27. Vorrichtung gemäß irgend einem der Ansprüche 5-26, dadurch gekennzeichnet, daß die für die Versorgung des Trichters (5) mit Rohstoffen vorgesehenen Einrichtungen (11) aus einem auf dem Gestell (6) angelenkten Kübel (57) sowie aus Antriebsorganen für diese Kübel bestehen, die auf dem genannten Gestell und auf dem Kübel so angeordnet sind, daß letztgenannter zwei extreme Lagen annehmen kann, nämlich eine erste Lage, in der die Ladefläche (58) des Kübels ziemlich waagerecht und in einer solchen Entfernung vom Boden liegt, daß man darauf das in den Trichter zu schüttende Material auflegen kann und eine zweite Lage, in der der Kübel oberhalb des Trichters umgekippt wird, damit das Material durch sein eigenes Gewicht in den genannten Trichter hineinfällt.

FIG. 1

FIG. 2

FIG. 4

FIG. 5

FIG. 3

FIG. 6

FIG. 7

FIG. 8

FIG. 9

FIG. 10

FIG. 11

FIG. 12

4